# FASCICULE DE BREVET EUROPEEN

(11) **EP 0 519 844 B1**
(45) Date de publication et mention de la délivrance du brevet: **03.01.1996**
(21) Numéro de dépôt: 92420203.9
(22) Date de dépôt: 15.06.1992
(51) Int. Cl.: G01D 5/22

(54) **Capteur angulaire à transformateur différentiel**
Winkelgeber mit einem Differentialtransformator
Angle sensor with differential transformer

(30) Priorité: 17.06.1991 FR 9107902
(43) Date de publication de la demande: 23.12.1992
(73) Titulaire: CROUZET Automatismes, F-26000 Valence (FR)
(72) Inventeur: Flandin, Denis, F-26300 Bourg-de-Péage (FR); Col, Dominique, F-26300 Bourg-de-Péage (FR)
(74) Mandataire: de Beaumont, Michel

(56) Documents cités:
- FR-A- 2 041 410

## Description

La présente invention concerne les capteurs angulaires à transformateur différentiel.

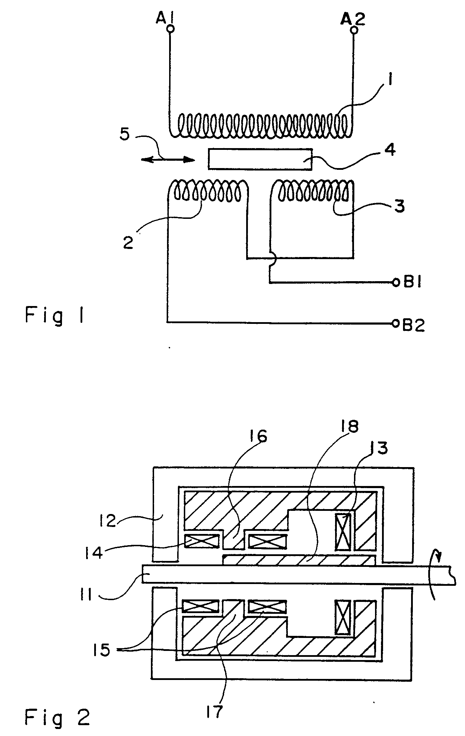

A titre de rappel, le principe général d'un capteur de déplacement à transformateur différentiel est illustré de façon très schématique en figure 1 dans le cas d'un capteur linéaire. Ce capteur comprend un transformateur dont le primaire 1 est associé à des bornes d'alimentation A1 et A2. A ce primaire, sont associés deux enroulements secondaires 2 et 3 connectés en série et en opposition sur des bornes B1 et B2. Un noyau magnétique 4 couple l'enroulement primaire aux enroulements secondaires. La longueur de ce noyau magnétique est insuffisante pour assurer un couplage complet de chacun des secondaires au primaire. Ce noyau est mobile en translation dans la direction de la flèche 5.

Le noyau 4 est représenté à une position médiane, dite position d'équilibre, dans laquelle il assure un couplage identique entre le primaire 1 et chacun des secondaires 2 et 3. Alors, quand une tension alternative est appliquée entre les bornes A1 et A2, une tension nulle est recueillie entre les bornes B1 et B2. Par contre, si le noyau est déplacé en translation dans un sens ou dans l'autre par rapport à la position d'équilibre, les secondaires 2 et 3 sont couplés de façon dissymétrique par rapport à l'enroulement primaire 1 et les tensions à leurs bornes ne s'annulent plus. On obtient alors entre les bornes B1 et B2 une tension dont la valeur dépend de l'amplitude du déplacement. On montre que la variation de tension est proportionnelle au déplacement au moins sur une certaine plage autour de la position d'équilibre.

On a tenté dans l'art antérieur d'utiliser le principe du transformateur différentiel pour réaliser un capteur angulaire au lieu d'un capteur linéaire.

Un exemple de capteur angulaire de l'art antérieur est illustré en figure 2. Ce capteur est destiné à détecter la position en rotation d'un axe 11 tournant sur des paliers ménagés dans une carcasse 12. Ce capteur comprend un enroulement primaire 13 disposé sensiblement dans un plan radial pour fournir un champ dirigé axialement. Des premier et second enroulements secondaires 14 et 15 sont disposés symétriquement par rapport à l'axe 11 dans des plans perpendiculaires au plan du premier enroulement 13. Ces enroulements 14 et 15 sont bobinés autour de pièces polaires 16 et 17 tournées vers l'axe. Un circuit magnétique relie ces pièces polaires 16 et 17 à l'arrière de la bobine 13.

L'axe 11 est ovalisé ou comprend un revêtement magnétique 18 de forme ovale. Dans la figure 2, on a représenté la partie ovalisée tournée du côté de la pièce polaire 16. Ainsi, le flux magnétique produit par la bobine 13 s'écoule par l'axe 11 et le revêtement 18 essentiellement vers la pièce polaire 16 pour venir se refermer vers l'arrière de la bobine 13. A la position d'équilibre, le champ se referme symétriquement en passant par les pièces polaires 16 et 17.

Ce montage de l'art antérieur fonctionne de façon satisfaisante et permet couramment de détecter avec précision des décalages de position allant jusqu'à quelques dizaines de degrés par rapport à la position d'équilibre. Toutefois, il présente deux inconvénients principaux. Le premier inconvénient réside dans la susceptibilité aux perturbations magnétiques extérieures arrivant par l'axe de rotation. Le deuxième inconvénient réside dans le fait qu'un tel capteur est inévitablement relativement encombrant.

La demande de brevet français 2 041 410 décrit un capteur angulaire plus compact que celui de la figure 2 et moins sensible aux perturbations magnétiques extérieures. Toutefois, la précision de mesure de ce capteur dépend fortement de la précision de positionnement au montage de certains des éléments du capteur par rapport aux autres. Le soin requis au montage d'un tel capteur et les formes complexes de ses éléments rendent sa fabrication coûteuse.

Un objet de la présente invention est de prévoir un capteur angulaire à transformateur différentiel peu sensible aux champs magnétiques externes et qui puisse être de très petites dimensions tout en étant facile à fabriquer et à monter.

Pour atteindre ces objets ainsi que d'autres, la présente invention prévoit un capteur angulaire à transformateur différentiel pour déterminer la position angulaire d'un axe par rapport à une position d'équilibre comprenant un bobinage primaire enroulé autour dudit axe et produisant un flux magnétique ; un secteur de disque en un matériau ferromagnétique, solidaire de l'axe et perpendiculaire à l'axe ; deux demi-couronnes en un matériau ferromagnétique, centrées sur l'axe et disposées d'un côté et de l'autre d'un plan contenant l'axe et correspondant à ladite position d'équilibre ; et un bobinage secondaire associé à chaque demi-couronne et d'axe parallèle audit axe. Lesdites demi-couronnes sont situées symétriquement par rapport au point d'intersection de l'axe et du plan du secteur de disque et non symétriquement par rapport audit plan contenant l'axe, et ledit axe comprend un matériau ferromagnétique au moins entre les plans extrêmes déterminés par le ou les bobinages primaires et les demi-couronnes d'où il résulte qu'il constitue une partie du trajet dudit flux.

Selon un mode de réalisation de la présente invention, chacun des bobinages secondaires est en forme de croissant enroulé autour d'une demi-couronne.

Selon un mode de réalisation de la présente invention, chaque bobinage secondaire est cylindrique, enroulé autour d'une demi-couronne et centré sur l'axe.

Selon un mode de réalisation de la présente invention, ledit au moins un bobinage primaire comprend deux bobinages disposés de part et d'autre du plan du secteur.

Selon un mode de réalisation de la présente invention, chacun des bobinages primaires est disposé avec l'un des bobinages secondaires dans un demi-pot en un matériau ferromagnétique, chaque demi-pot comprenant un fond en forme de disque muni d'une couronne périphérique en saillie, la couronne périphérique de chaque demi-pot étant dimensionnée pour, en position montée, venir s'appuyer sur la couronne périphérique de l'autre demi-pot.

Selon un mode de réalisation de la présente invention, chacune des demi-couronnes est disposée à l'intérieur d'un demi-pot et est solidaire du fond du demi-pot.

Selon un mode de réalisation de la présente invention, les demi-couronnes sont situées d'un côté et de l'autre du secteur de disque dont le rayon est au moins égal au rayon intérieur des demi-couronnes.

Selon un mode de réalisation de la présente invention, chacune des demi-couronnes s'étend de part et d'autre du plan du secteur de disque, le rayon interne de ces demi-couronnes étant supérieur au rayon du secteur.

Selon un mode de réalisation de la présente invention, les demi-couronnes comprennent une rainure parallèle au secteur de disque, dans laquelle le bord périphérique du secteur de disque se déplace.

Ces objets, caractéristiques et avantages ainsi que d'autres de la présente invention sont exposés plus en détail dans la description suivante de modes de réalisation particuliers faite en relation avec les dessins joints parmi lesquels :
la figure 1 représente schématiquement le principe connu d'un capteur linéaire à transformateur différentiel ;
la figure 2 est une vue en coupe schématique d'un capteur angulaire à transformateur différentiel selon l'art antérieur ;
les figures 3A et 3B illustrent respectivement une vue de côté en coupe et une vue de dessus en coupe d'un mode de réalisation d'un capteur angulaire à transformateur différentiel selon la présente invention ;
la figure 4 illustre un mode de réalisation d'un élément des figures 3A et 3B ; et
les figures 5A et 5B illustrent respectivement une vue de côté et une vue de dessus en coupe d'un autre mode de réalisation de capteur angulaire selon la présente invention.

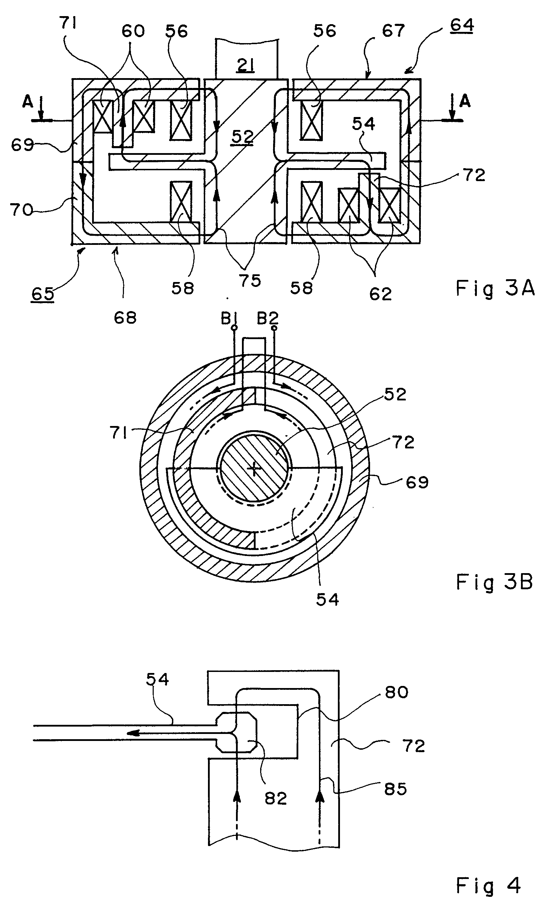

La figure 3A illustre une vue en coupe d'un mode de réalisation d'un capteur angulaire destiné à déterminer la position angulaire d'un axe 21 traversant un palier non représenté prévu dans une embase non représentée. Au bout de l'axe 21 est fixé un cylindre 52 en un matériau ferromagnétique. Le cylindre 52 comprend à mi-hauteur un secteur tournant 54 perpendiculaire au cylindre 52. Ce secteur 54 est en un matériau ferromagnétique et est, soit rapporté sur le cylindre 52, soit réalisé en même temps que celui-ci. Deux enroulements primaires fixes 56 et 58 sont bobinés autour du cylindre 52 de part et d'autre du secteur 54 dans des plans parallèles à ce dernier. De part et d'autre du secteur 54 et symétriquement par rapport à l'axe 21 sont disposés un premier enroulement secondaire 60 sensiblement dans le plan de l'enroulement primaire 56 et un deuxième enroulement secondaire 62 sensiblement dans le plan de l'enroulement primaire 58. Les dispositions des enroulements secondaires seront exposées plus en détail en relation avec la figure 3B.

Les enroulements 56 et 60 sont disposés dans un demi-pot supérieur en matériau ferromagnétique 64 et les enroulements 58 et 62 sont disposés dans un demi-pot inférieur identique 65 tourné à 180° par rapport au supérieur.

En se référant aux figures 3A et 3B, on notera que chacun des demi-pots comprend un fond, respectivement 67 et 68, et une couronne périphérique en saillie, respectivement 69 et 70, ayant une hauteur telle qu'en position montée, ces couronnes périphériques butent l'une contre l'autre comme le représente la figure 3A.

En outre, chacun des demi-pots comprend une demi-couronne, respectivement 71 et 72, en saillie intérieure, ayant une fonction de pièce polaire, et autour de laquelle est bobiné en forme de croissant l'un des enroulements secondaires. La forme de ces demi-couronnes intérieures est plus visible à la figure 3B qui représente une vue de face en coupe selon les flèches A de la figure 3A, où les éléments se trouvant derrière le plan de coupe sont également représentés. Selon les flèches A, sont visibles en coupe la couronne périphérique 69 et la demi-couronne intérieure 71 du demi-pot supérieur. Le secteur circulaire 54 (un demi-disque) est représenté à la position de repos dans laquelle il est en face de surfaces égales des deux demi-couronnes 71 et 72. Le secteur 54 est partiellement caché par la demi-couronne 71 et il cache la moitié de la demi-couronne 72. Dans la vue de la figure 3B, les demi-couronnes 71 et 72 forment une couronne complète sans discontinuités.

Les enroulements primaires 56 et 58 sont branchés en opposition de phase et créent des champs en sens opposés dans le cylindre 52. Comme le représente la figure 3B, chacun des enroulements secondaires est enroulé autour de l'une des demi-couronnes 71 et 72. Ces deux enroulements secondaires sont reliés en série à des bornes B1 et B2 de façon que les courants induits s'opposent quand les enroulements secondaires reçoivent un flux.

Ainsi, le champ magnétique produit par l'enroulement primaire 56 tend à passer, par exemple, comme cela est représenté par des lignes de champ 75 à la figure 3A, par le cylindre 52 et le secteur tournant 54 qui sont constitués d'un matériau magnétique vers la pièce polaire constituée par la demi-couronne en matériau magnétique 71, puis, d'une part, vers l'extrémité supérieure du cylindre 52 par le fond 67 du demi-pot 64 et, d'autre part, vers l'autre extrémité du cylindre 52 par les couronnes périphériques 69 et 70 et par le fond 68 de l'autre demi-pot.

Le champ magnétique produit par l'enroulement primaire 58 tend à passer, par exemple, par le cylindre 52 et le secteur tournant 54 vers la pièce polaire constituée par la demi-couronne 72, puis, d'une part, vers l'extrémité inférieure du cylindre 52 par le fond 68 et, d'autre part, vers l'autre extrémité du cylindre 52 par les couronnes périphériques 69 et 70 et par l'autre fond 67.

Quand le secteur tournant est déplacé par rapport à la position d'équilibre illustrée en figure 3B, la tension apparaissant aux bornes B1, B2 des enroulements secondaires en série constitue une représentation linéaire de la déviation angulaire de l'axe 21. L'expérience montre que le capteur de déplacement selon la présente invention est très linéaire sur une amplitude angulaire supérieure à ±60° par rapport à la position d'équilibre.

Un avantage du capteur selon l'invention est la faible sensibilité aux défauts de perpendicularité du secteur 54 par rapport à l'axe 21. En effet, une variation d'entrefer entre le secteur 54 et l'une des demi-couronnes due à un tel défaut est compensée par la même variation au niveau de l'autre demi-couronne.

Un autre avantage du capteur est la relative insensibilité aux champs magnétiques extérieurs arrivant par l'axe de rotation. En effet, le capteur fonctionne avec un champ différentiel créé par les deux enroulements primaires et qui est indépendant de la valeur absolue du champ dans l'axe.

Un autre avantage du capteur est que la somme des entrefers est constante quelle que soit la position du secteur 54, et donc que l'inductance des enroulements, notamment des enroulements primaires, est constante. En effet, grâce au fait que les deux demi-couronnes 71, 72 forment un anneau continu (vue selon la figure 3B), la surface en regard du secteur 54 avec les demi-couronnes 71 et 72 reste constante quelle que soit la position du secteur 54.

La figure 4 illustre en vue agrandie un mode de réalisation des demi-couronnes 71 et 72 (une seule, 72, est représentée) permettant de compenser les variations d'entrefer dus à un défaut de positionnement axial du secteur 54. La demi-couronne 72 comprend une rainure 80 parallèle au secteur 54 dans laquelle vient se déplacer la circonférence du secteur, qui peut comprendre un épaississement 82. L'épaississement 82 est suffisamment loin du fond de la rainure 80 et suffisamment proche des parois de la rainure pour que le champ passe, comme cela est représenté par des flèches 85, de chacune des parois de la rainure 80 vers l'épaississement 82. Ainsi, si le secteur 54 comporte un défaut de positionnement axial, l'épaississement 82 se rapproche de l'une des parois de la rainure en s'éloignant de l'autre paroi et, en conséquence, l'entrefer reste constant. La demi-couronne 71, non représentée, comporte la même rainure.

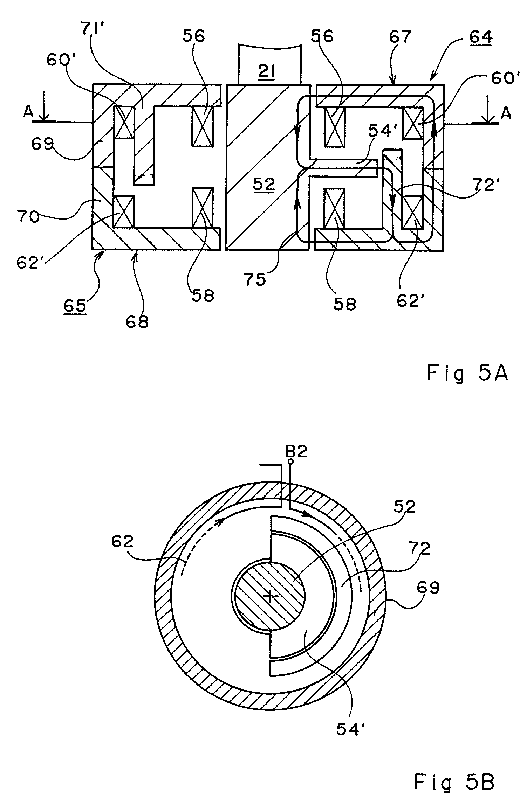

Les figures 5A et 5B représentent respectivement en vue de côté et de dessus un autre mode de réalisation de capteur angulaire selon la présente invention. On retrouve des mêmes éléments qu'aux figures 3A et 3B, désignés par des mêmes références. Le secteur de disque 54′ est ici représenté à 90° par rapport à la position d'équilibre. Ce mode de réalisation inclut diverses variantes de l'invention.

Selon une première variante, le secteur de disque 54′ est disposé à l'intérieur des demi-couronnes 71′ et 72′. Pour cela, le diamètre du secteur de disque 54′ est inférieur au diamètre intérieur des demi-couronnes 71′ et 72′ et les demi-couronnes sont prolongées au-delà du plan du secteur 54′.

Cette disposition permet, pourvu que l'on respecte avec précision la coaxialité entre l'axe 21 et le secteur de disque 54′, de compenser de manière simple tout défaut de perpendicularité et de positionnement axial du secteur de disque 54′. Les procédés connus de fabrication et de montage du secteur 54′ et de l'axe 21 permettent facilement de respecter la coaxialité entre le secteur et l'axe.

Selon une deuxième variante, qui pourrait aussi s'appliquer aux modes de réalisation des figures 3A, 3B et 4, pour simplifier l'enroulement des bobinages secondaires, ceux-ci sont réalisés, comme cela est représenté, de façon annulaire. Chaque bobinage secondaire 60′ et 62′, est centré sur l'axe 21 et entoure la demi-couronne associée.

Le parcours 75 des flux générés par les bobinages primaires 56 et 58 est similaire à celui de la figure 3A. Toutefois, les flux captés par les bobinages secondaires 60′ et 62′ sont différents. Chaque bobinage secondaire capte le flux passant par la demi-couronne associée ainsi que le flux passant dans le cylindre 52. Les effets dus au flux passant par le cylindre 52 sont supprimés par le branchement en opposition des bobinages secondaires 60′ et 62′. Ainsi, le signal fourni par le capteur est sensiblement identique à celui fourni avec une disposition de bobinage secondaire selon les figures 3A et 3B.

La configuration selon la présente invention permet d'obtenir un capteur angulaire particulièrement compact. On a réalisé en pratique un capteur dont le diamètre externe est de 18 mm pour une distance entre fonds des demi-pots de 8,8 mm.

Une fois montés, les demi-pots 64 et 65 peuvent être encastrés dans une embase. Un capot peut être monté sur l'embase pour protéger l'ensemble de l'atmosphère extérieure et contenir les divers circuits électroniques de détection de tension et de mesure d'angle.

Diverses variantes pourront être apportées à la présente invention par l'homme de l'art. Par exemple, pour symétriser le dispositif et éviter tout balourd, le secteur tournant en matériau magnétique pourra constituer une partie d'un disque, l'autre partie de ce disque étant en un matériau non magnétique. De plus, de préférence, les parois internes de chacun des demi-pots seront revêtues d'un isolant ou bien une coquille isolante y sera insérée pour éviter tout risque de court-circuit.

## Revendications

1. Capteur angulaire à transformateur différentiel pour déterminer la position angulaire d'un axe (21, 52) par rapport à une position d'équilibre comprenant :
- au moins un bobinage primaire (56, 58) enroulé autour dudit axe et produisant un flux magnétique ;
- un secteur de disque (54) en un matériau ferromagnétique, solidaire de l'axe et perpendiculaire à l'axe ;
- deux demi-couronnes (71, 72) en un matériau ferromagnétique, centrées sur l'axe et disposées d'un côté et de l'autre d'un plan contenant l'axe et correspondant à ladite position d'équilibre ; et
- un bobinage secondaire (60, 62) associé à chaque demi-couronne et d'axe parallèle audit axe ;
caractérisé en ce que lesdites demi-couronnes sont situées symétriquement par rapport au point d'intersection de l'axe et du plan du secteur de disque et non symétriquement par rapport audit plan contenant l'axe, en ce que ledit axe comprend un matériau ferromagnétique au moins entre les plans extrêmes déterminés par le ou les bobinages primaires et les demi-couronnes d'où il résulte qu'il constitue une partie du trajet dudit flux.

2. Capteur angulaire selon la revendication 1, caractérisé en ce que chacun des bobinages secondaires (60, 62) est en forme de croissant enroulé autour d'une demi-couronne (71, 72).

3. Capteur angulaire selon la revendication 1, caractérisé en ce que chacun des bobinages secondaires (60, 62) est cylindrique enroulé autour d'une demi-couronne (71,72) et centré sur l'axe (52).

4. Capteur angulaire selon la revendication 1, caractérisé en ce que ledit au moins un bobinage primaire (56, 58) comprend deux bobinages disposés de part et d'autre du plan du secteur.

5. Capteur angulaire selon la revendication 4, caractérisé en ce que chacun des bobinages primaires (56, 58) est disposé avec l'un des bobinages secondaires (60,62) dans un demi-pot (64, 65) en un matériau ferromagnétique, chaque demi-pot comprenant un fond (67, 68) en forme de disque muni d'une couronne périphérique en saillie (69, 70), la couronne périphérique de chaque demi-pot étant dimensionnée pour, en position montée, venir s'appuyer sur la couronne périphérique de l'autre demi-pot.

6. Capteur angulaire selon la revendication 5, caractérisé en ce que chacune des demi-couronnes (71, 72 est disposée à l'intérieur d'un demi-pot (64, 65) et est solidaire du fond du demi-pot.

7. Capteur selon la revendication 1, caractérisé en ce que les demi-couronnes (71, 72) sont situées d'un côté et de l'autre du secteur de disque (54) dont le rayon est au moins égal au rayon intérieur des demi-couronnes.

8. Capteur selon la revendication 1, caractérisé en ce chacune des demi-couronnes (71′, 72′) s'étend de part et d'autre du plan du secteur de disque, le rayon interne de ces demi-couronnes étant supérieur au rayon du secteur.

9. Capteur selon la revendication 1, caractérisé en ce que les demi-couronnes comprennent une rainure (80) parallèle au secteur de disque, dans laquelle le bord périphérique du secteur de disque se déplace.

## Patentansprüche

1. Winkelsensor mit einem differentiellen Transformator zum Bestimmen der Winkelposition einer Achse (21, 52) bezüglich einer Gleichgewichtsposition, der folgendes aufweist:
- mindestens eine Primärwicklung (54, 58), und zwar gewickelt um die Achse (52) und die einen magnetischen Fluß erzeugt;
- einen Scheibensektor bzw. -abschnitt (54) und zwar hergestellt aus einem ferromagnetischen Material, und zwar integral bzw. einstückig mit und senkrecht zu der Achse (52);
- zwei Halbkronen (71, 72) hergestellt aus einem ferromagnetischen Material, zentriert um die Achse (52) und angeordnet auf beiden Seiten einer Ebene, die die Achse (52) aufweist und der Gleichgewichtsposition entspricht; und
- eine Sekundärwicklung (60, 62) assoziiert mit jeder Halbkrone und mit ihrer Achse parallel zu der Achse (52);
dadurch gekennzeichnet, daß die Halbkronen symmetrisch bezüglich dem Schnitt der Achse (52) und der Ebene des Scheibensektors und asymmetrisch bezüglich der Ebene, die die Achse (52) aufweist angeordnet sind, und wobei die Achse (52) ein ferromagnetisches Material aufweist, und zwar mindestens zwischen den Endebenen, die durch die mindestens eine Primärwicklung und die Halbkronen bestimmt werden, wodurch das ferromagnetische Material einen Teil des Pfades des magnetischen Flusses aufbaut.

2. Winkelsensor nach Anspruch 1, dadurch gekennzeichnet, daß jede der Sekundärwicklungen (60, 62) sichelförmig ist und um eine Halbkrone (71, 72) gewickelt ist.

3. Winkelsensor nach Anspruch 1, dadurch gekennzeichnet, daß jede der Sekundärwicklungen (60, 62) zylindrisch ist, um eine Halbkrone (71, 72) gewickelt ist und um die Achse (52) zentriert ist.

4. Winkelsensor nach Anspruch 1, dadurch gekennzeichnet, daß die mindestens eine Primärwicklung (56, 58) zwei Wicklungen aufweist, und zwar angeordnet auf beiden Seiten der Sektorebene.

5. Winkelsensor nach Anspruch 4, dadurch gekennzeichnet, daß jede der Primärwicklungen (56, 58) mit einer der Sekundärwicklungen (60, 62) in einem Halbtopf (64, 65) aus einem ferromagnetischen Material angeordnet ist, wobei jeder Halbtopf einen scheibenförmigen Boden (67, 68) vorgesehen mit einer vorstehenden Umfangskrone (69, 70) aufweist, wobei die Umfangskrone jedes Halbtopfs eine Größe besitzt, so daß wenn sie befestigt ist, sie gegen die Umfangskrone des anderen Halbtopfs anstößt bzw. anliegt.

6. Winkelsensor nach Anspruch 5, dadurch gekennzeichnet, daß jede Halbkrone (71, 72) innerhalb eines Halbtopfs (64, 65) angeordnet ist und integral mit dem Boden des Halbtopfs ist.

7. Winkelsensor nach Anspruch 1, dadurch gekennzeichnet, daß die Halbkronen (71, 72) auf beiden Seiten des Scheibensektors (54) angeordnet sind, dessen Radius mindestens gleich dem Innenradius der Halbkronen ist.

8. Winkelsensor nach Anspruch 1, dadurch gekennzeichnet, daß jede der Halbkronen (71', 72') sich auf beiden Seiten der Ebene des Scheibensektors erstreckt, wobei der Innenradius dieser Halbkronen größer als der Radius des Sektors ist.

9. Winkelsensor nach Anspruch 1, dadurch gekennzeichnet, daß die Halbkronen eine Nut (80) parallel zu dem Scheibensektor aufweisen, wobei die Umfangskante des Scheibensektors sich entlang der Nut (80) bewegt.

## Claims

1. An angular sensor including a differential transformer for determining the angular position of an axis (21, 52) with respect to an equilibrium position comprising:
- at least one primary winding (54, 58) wound about said axis (52) and generating a magnetic flux;
- a disk sector (54) made of a ferromagnetic material, integral with and perpendicular to said axis (52);
- two half-crowns (71, 72) made of a ferromagnetic material, centered about said axis (52) and disposed on both sides of a plane comprising said axis (52) and corresponding to said equilibrium position; and
- a secondary winding (60, 62) associated with each half-crown and having its axis parallel to said axis (52);
characterized in that said half-crowns are symmetrically disposed with respect to the intersection of said axis (52) and the plane of said disk sector and unsymmetrically disposed with respect to the plane comprising said axis (52), and wherein said axis (52) includes a ferromagnetic material at least between the end planes determined by said at least one primary winding and said half-crowns, whereby said ferromagnetic material constitutes a portion of the path of the magnetic flux.

2. The angular sensor of claim 1, characterized in that each of said secondary windings (60, 62) is crescent-shaped and is wound about a half-crown (71, 72).

3. The angular sensor of claim 1, characterized in that each of said secondary windings (60, 62) is cylindrical, wound about a half-crown (71, 72) and centered about the axis (52).

4. The angular sensor of claim 1, characterized in that said at least one primary winding (56, 58) comprises two windings disposed on both sides of the sector plane.

5. The angular sensor of claim 4, characterized in that each of said primary windings (56, 58) is disposed with one of said secondary windings (60, 62) in a half-pot (64, 65) made of a ferromagnetic material, each half-pot comprising a disk-shaped bottom (67, 68) provided with a protruding peripheral crown (69, 70), the peripheral crown of each half-pot having such a size that, when mounted, it abuts against the peripheral crown of the other half-pot.

6. The angular sensor of claim 5, characterized in that each half-crown (71, 72) is disposed inside a half-pot (64, 65) and is integral with the bottom of the half-pot.

7. The angular sensor of claim 1, characterized in that said half-crowns (71, 72) are disposed on both sides of the disk sector (54) whose radius is at least equal to the inner radius of the half-crowns.

8. The angular sensor of claim 1, characterized in that each of the half-crowns (71', 72') extends on both sides of the plane of the disk sector, the inner radius of these half-crowns being larger than the radius of the sector.

9. The angular sensor of claim 1, characterized in that said half-crowns comprise a groove (80) parallel with the disk sector, the peripheral edge of the disk sector moving along the groove (80).
